# EUROPEAN PATENT SPECIFICATION

(11) **EP 3 348 421 B1**
(45) Date of publication and mention of the grant of the patent: **15.05.2019**
(21) Application number: 17196785.4
(22) Date of filing: 17.10.2017
(51) Int. Cl.: B60B 35/10

(54) **WEIGHT-BEARING AND BRAKING AXLE FOR VEHICLES**
GEWICHTSTRAGENDE UND BREMSACHSE FÜR FAHRZEUGE
ESSIEU DE FREINAGE ET DE MISE EN CHARGE POUR DES VÉHICULES

(30) Priority: 12.01.2017 IT 201700003097
(43) Date of publication of application: 18.07.2018
(73) Proprietor: R.P.F. S.p.A., 21040 Uboldo (Varese) (IT)
(72) Inventor: RADRIZZANI, Flavio, 21040 Uboldo (Varese) (IT)
(74) Representative: Rapisardi, Mariacristina

(56) References cited:
- CN-U- 202 541 635
- US-A- 2 099 194
- US-A- 4 449 600
- US-A1- 2016 009 135

## Description

The present invention relates to a weight-bearing and braking axle for vehicles.

As is well known, at present the weight-bearing axles of a vehicle must enable an adaptation of their track width according to different operating needs.

In particular, in the case of a towed vehicle, there is sometimes a need to have the same track width as the driving vehicle so as to limit the area of impact of the wheels on the ground, or else to have a track width differing from that of the driving vehicle in order to better distribute the pressure of the wheels on the ground.

In general, there is often a need to comply with a predefined wheelbase of the vehicle, for example in the case of farm machinery operating on row crops, or else, in the case of some categories of work machinery, the need to increase the vehicle's stability in the case of manoeuvres that entail considerable variations in the centre of gravity of the machine.

At present, the weight-bearing and braking axles of a vehicle are in capable of increasing their track width by a small percentage, close to 20% of the initial track width, since the telescopes presently used do not enable greater extensions to be reached.

In addition, the present weight-bearing axles do not allow a structure to be built, which is able to withstand both bending and twisting, i.e. the effect of the load and the braking torque.

The task that the present invention sets itself is that of eliminating the aforementioned drawbacks of the prior art.

Within the scope of this task, it is an object of the invention to provide a weight-bearing and braking axle for vehicles, which enables an increase in the track width equal to at least 50 % of the base length of the axle.

A further object of the invention is to provide a weight-bearing and braking axle for vehicles that is capable of withstanding both bending and twisting, i.e. the effect of the load and the braking torque.

Yet another object of the invention is to provide a weight-bearing and braking axle for vehicles that is formed by two identical parallel telescopes oriented in opposite directions so as to ensure easier management of the parts in stock and smaller overall dimensions.

It is a further object of the invention to provide a weight-bearing and braking axle for vehicles that enables a variation in the track width employing two parallel telescopic bodies enabling the axle to be extended from opposite sides relative to the middle of the axle itself.

This and other objects are achieved by a weight-bearing and braking axle for vehicles, characterised in that it comprises a first telescope A having a first main cylinder 1a, a first cylinder 2a and a first cylindrical extension body 3a and a second telescope B having a second main cylinder 1b, a second cylinder 2b and a second cylindrical extension body 3b, said first and second main cylinders 1a and 1b being connected to each other by a frame 13, said first cylinder 2a and said second cylindrical body 3b being connected to each other by means of a first structure 8a, which has a first mechanical assembly 9a adapted to support a first wheel of the vehicle, said second cylinder 2b and said first cylindrical body 3a being connected to each other by means of a second structure 8b, which has a second mechanical assembly 9b adapted to support a second wheel of the vehicle, said first and second telescopes A and B being activated by a drive means 11 in order to bring about the movement thereof in two opposite directions to vary the axle track width.

The dependent claims further clarify the features of the weight-bearing and braking axle for vehicles according to the invention. US 2099194 A acknowledges preamble of Claim 1 In particular, the first and second telescopes A and B are arranged parallel to each other on the same plane and are oriented in opposite directions. The first and second main cylinders 1a and 1b each comprise at their respective ends a first and a second head 4a and 5a, for the first main cylinder 1a and a first and a second head 4b and 5b for the second main cylinder 1b, wherein 4a and 4b are limit stops for the first and second cylinders 2a and 2b, respectively, when retracted, whereas 5a and 5b have the function of guiding the aforesaid first and second cylinders 2a and 2 b.

The first and second cylinders 2a and 2b each comprise a first and a second ring 14a and 14b, and the first and second cylindrical bodies 3a and 3b comprise a third and a fourth ring 6a and 6b.

The first and second rings 14a and 14b are the limit stop for the first and second cylindrical bodies 3a and 3b inside said first and second cylinders 2a and 2b when the first and second cylindrical bodies 3a and 3b are completely extended and said third and fourth rings 6a and 6b are in contact with said first and second rings 14a and 14b.

The first and second structures 8a and 8b are the limit stops for said first and second cylinders 3a and 3b when completely retracted.

The drive means 11 comprises a pair of fluid-dynamic cylinders 11 having respective rods 10 for the simultaneous extension of the first and second cylindrical bodies 3a and 3b and the first and second cylinders 2a and 2b.

The fluid-dynamic cylinders 11 are jointed to two supports 12 respectively integral with said first and second main cylinders 1a and 1b and/or said frame 13.

The rods 10 are jointed to two supports 7 integral with said first and second structures 8a and 8b.

The drive means comprises a worm and a screw or a rack.

Advantageously, the main cylinder consists of two half-cylinders 115a and 117a connected to each other by a central element 116a, which has a guide ring 118a inside it to enable the sliding of said cylinder 102a.

Moreover, the main cylinder 101a has a first and a second head 104a and 105a at the respective ends thereof.

The first head 104a defines the limit stop of the cylinder 102a when it is retracted and said second head 105a has the function of guiding said cylinder 102a, which comprises a ring 114a, whilst said cylindrical body 103a comprises a ring 116a.

The ring 114a acts as a limit stop for said cylindrical body 103a when it is totally extended from said cylinder 102a.

Additional features and advantages of the invention will become more apparent from the description of a preferred but non-exclusive embodiment of a weight-bearing and braking axle for vehicles illustrated by way of non-limiting example in the appended drawings, in which:
Fig 1 is a perspective view of the weight-bearing and braking axle for vehicles according to the invention;

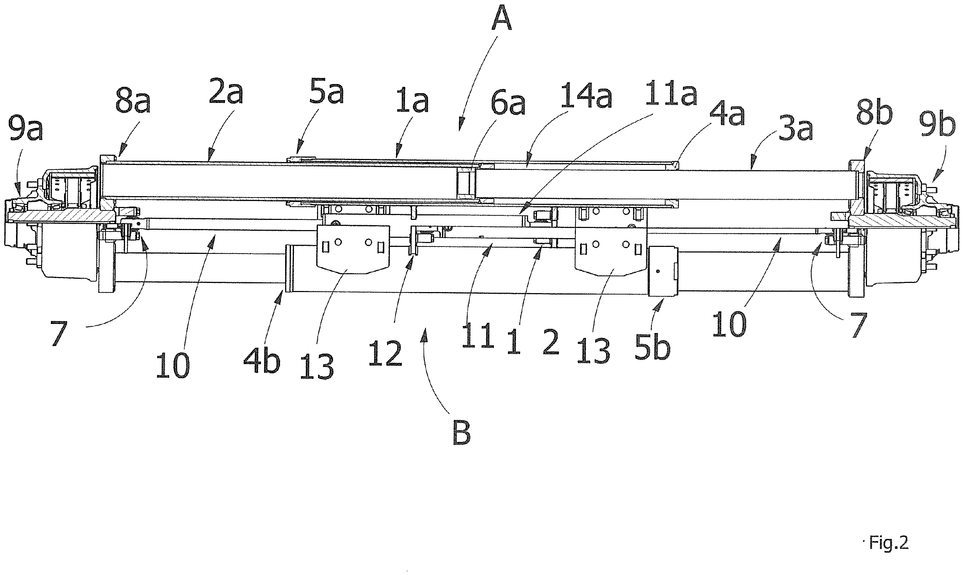

Fig 2 is a plan view of the weight-bearing and braking axle for vehicles in which the open telescope A according to the invention is shown in cross section;

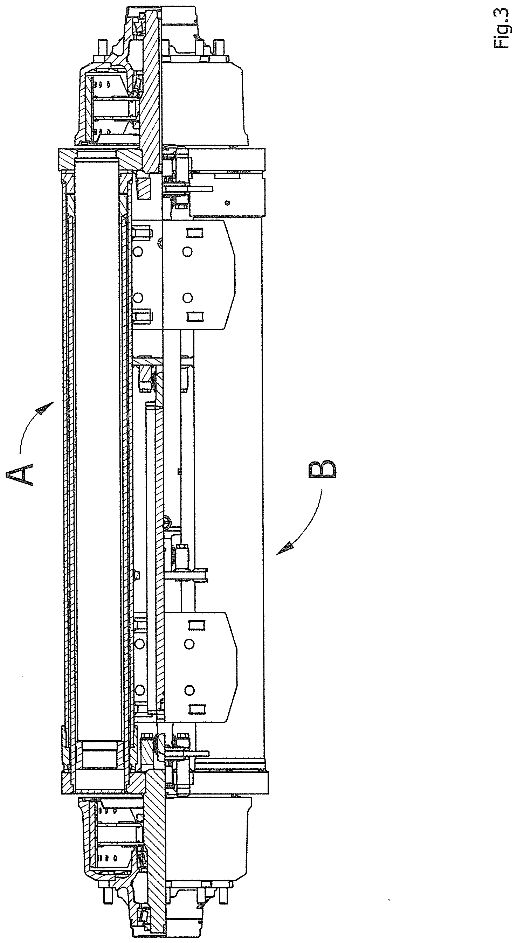

Fig 3 shows the axle of fig. 2 in a closed position;

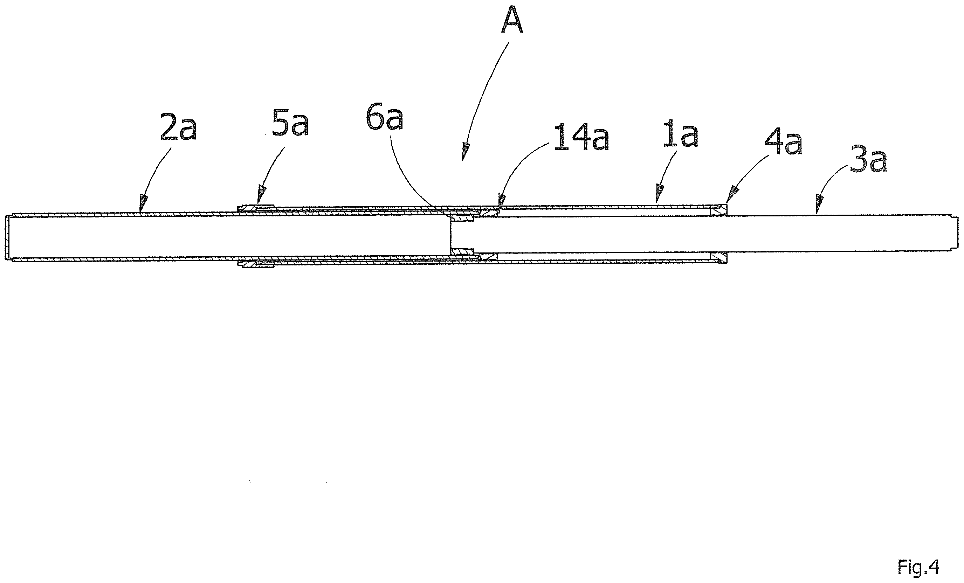

Fig 4 is a plan view of the telescope A according to the invention shown in cross section;

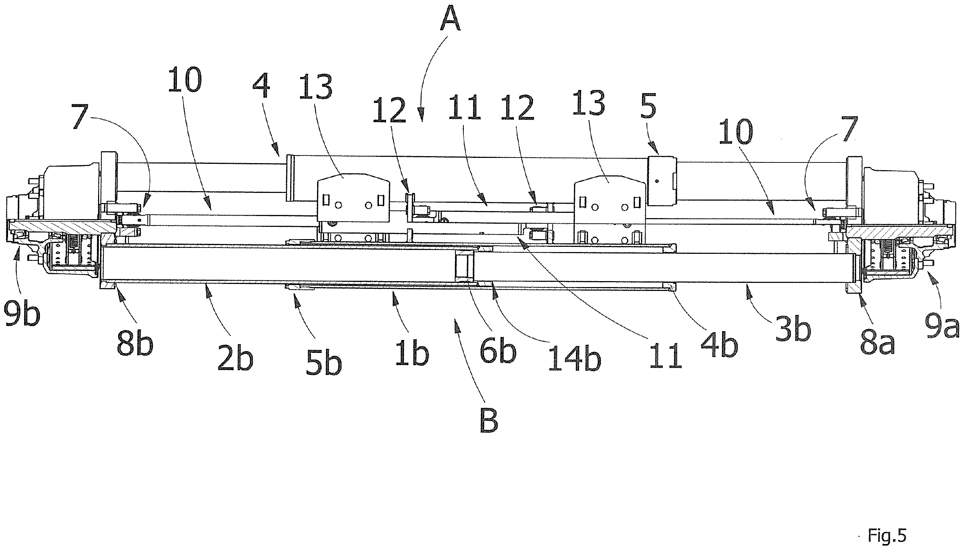

Fig 5 is a plan view of the weight-bearing and braking axle for vehicles, in which the open telescope B according to the invention is shown in cross section;

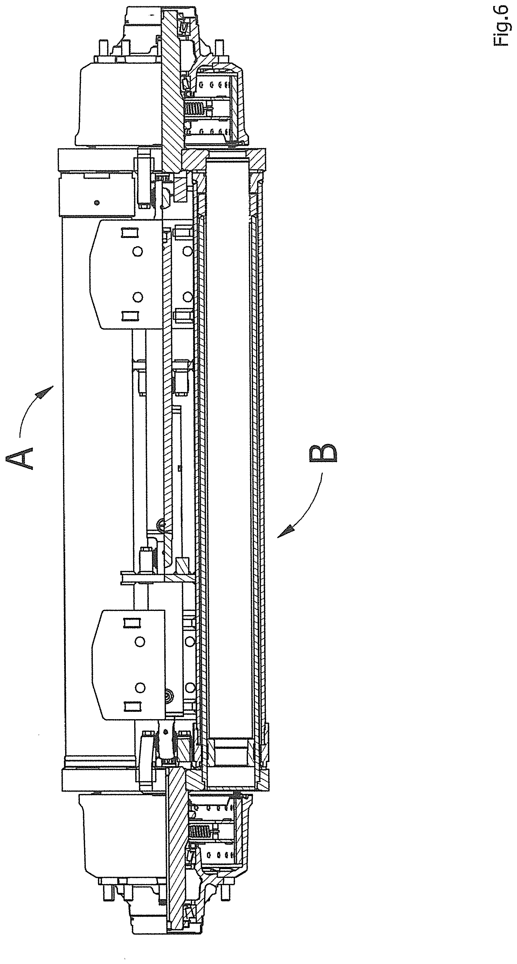

Fig 6 shows the axle of fig. 5 in a closed position;

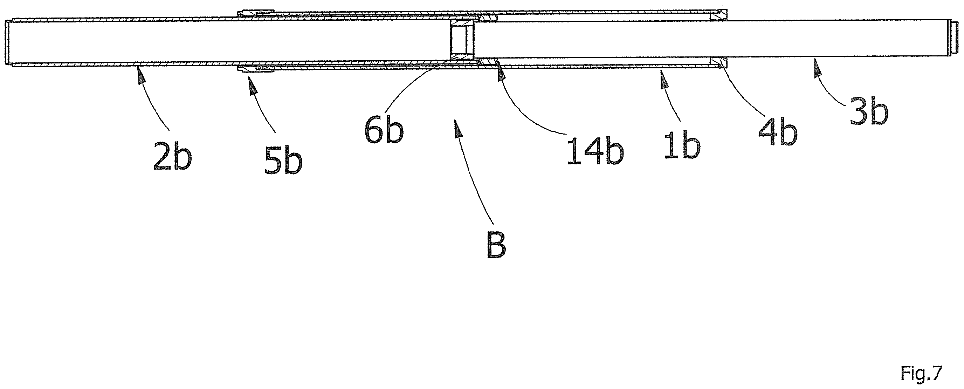

Fig 7 is a plan view of the telescope B according to the invention shown in cross section;
Fig 8 shows a variant embodiment of the telescope A alone, with toothed bars and a pinion according to the invention; and
Fig 9 shows a further variant embodiment in which the two half-cylinders are connected to a central element, also shown enlarged together with an enlargement of a head.

With particular reference to the above-described figures, the weight-bearing and braking axle for vehicles comprises a first telescope generically indicated with the letter A and a second telescope generically indicated with the letter B.

The telescope A has a first main cylinder 1a, a first cylinder 2a and a first cylindrical body 3a coaxial to one another.

The second telescope B has a second main cylinder 1b, a second cylinder 2b and a second cylindrical body 3b, likewise arranged coaxially to one another.

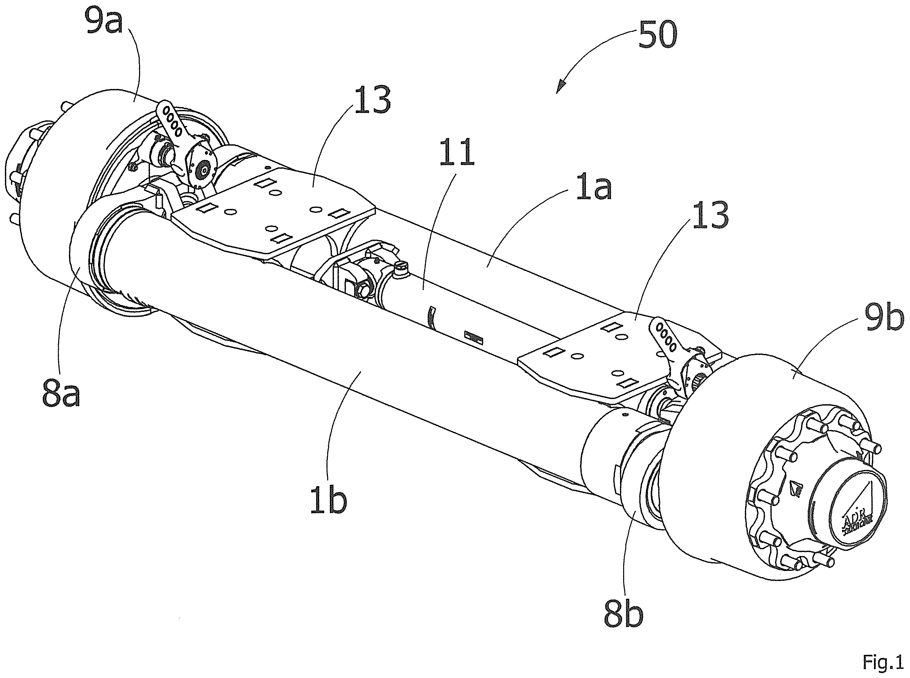

The first and second main cylinders 1a and 1b are connected to each other by a frame 13 and in particular, as shown in fig. 1, by two supports 13.

The first cylinder 2a and the second cylindrical body 3b are connected to each other at their ends by means of a first structure 8a which, in addition to the connecting function, also performs the function of supporting a first mechanical assembly 9a which in the drawings defines the left hub supporting a first wheel of the vehicle, not shown.

Similarly, the second cylinder 2b and the first cylindrical body 3a are connected to each other by means of a second structure 8b having a second mechanical assembly 9b which in the drawings defines the right hub supporting a second wheel of the vehicle.

The first and second telescopes A and B are arranged parallel to each other on the same plane and are activated by a drive means 11 in order to bring about their movement in two opposite directions to vary the axle track width.

In greater detail, the first and second main cylinders 1a and 1b each comprise at their respective ends a first and a second head 4a and 5a for the first main cylinder 1a and a first and a second head 4b and 5b for the second main cylinder 1b, wherein 4a and 4b are limit stops for the first and second cylinders 2a and 2b, respectively, when retracted, whereas 5a and 5b have the function of guiding the aforesaid first and second cylinders 2a and 2 b.

The first and second cylinders 2a and 2b each comprise a first and a second ring 14a and 14b and the first and second cylindrical bodies 3a and 3b comprise a third and a fourth ring 6a and 6b, whose function is described below.

The first and second rings 14a and 14b act as limit stops for the first and second cylindrical bodies 3a and 3b when they are completely extended from the first and second cylinders 2a and 2b.

In the situation described above, the third and fourth rings 6a and 6b are in contact with the first and second rings 14a and 14b.

The first and second structures 8a and 8b form limit stops for the first and second cylinders 3a and 3b when they are in their completely retracted position.

More in particular, the drive means 11 comprises a pair of fluid-dynamic cylinders 11 which, via their respective rods 10, simultaneously bring about both the extension of the first and second cylindrical bodies 3a and 3b and the first and second cylinders 2a and 2b.

The fluid-dynamic cylinders 11 are jointed to two supports 12 respectively integral with the first and second main cylinders 1a and 1b and the frame 13.

In a variant embodiment, the fluid-dynamic cylinders 11 can also be connected only to the frame 13.

The rods 10, by contrast, are jointed to two supports 7 integral on one side with the first structure 8a and on the other side with the second structure 8b.

In an unclaimed example, the drive means comprises a worm and a screw, not shown, or else it can also be made up of a rack and pinion or another suitable device.

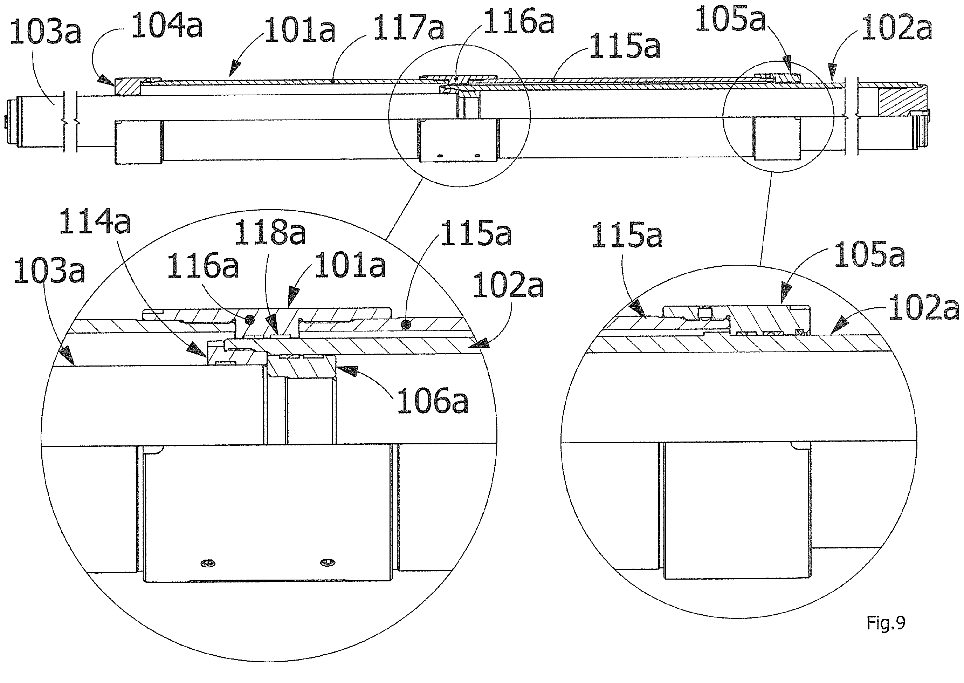

A further variant embodiment, which in figure 9 is represented only for the telescope A, can be used also or only for the telescope B according to the invention.

In the variant embodiment, the main cylinder 101a is not made in one piece as in the previous version, but rather consists of two half-cylinders 115a and 117a connected to each other by a central element 116a.

The central element 116a has a guide ring 118a inside it to enable the sliding of the cylinder 102a.

The main cylinder 101a further has a first and a second head 104a and 105a at respective ends. The first head 104a defines the limit stop of the cylinder 102a when it is retracted, whilst the second head 105a has the function of guiding the aforesaid cylinder 102a.

Moreover, the cylinder 102a comprises a ring 114a and the cylindrical body 103a comprises a ring 106a.

It is also noted that the ring 114a acts as a limit stop for the cylindrical body 103a when it is totally extended from the cylinder 102a.

The advantage that this technical solution achieves is to be able to use two half-cylinders 115a and 117a without performing any machining on their inner surface, since the outer surface of the cylinder 102a works only on the guide ring 118a.

The above advantageously means a reduction in the costs of making the main cylinder.

Furthermore, making two half-cylinders whose length is halved by the presence of the central element 116a provides all the advantages that may be derived from such a solution, for example in terms of transport, handling and storage.

The axle of the invention is structured in such a way that the function of the first and second cylindrical bodies 3a and 3b and the first and second cylinders 2a and 2b is multiple.

In fact, the functions performed by the axle of the invention are both to react to the force and relative moment on the vertical plane due to the weight bearing down on the axle and to react to the horizontal force and relative moment due to the reaction of the force exerted by the brakes relative to the ground and the one associated with the twisting moment due to the braking torque exerted by the brakes.

It is important to highlight that the above-described reactions are all balanced within the structure of the axle as follows.

In any working position of the axle that corresponds to a particular track width, the first and second cylindrical bodies 3a and 3b are configured as an isostatic rod with a projecting load having constraints, respectively, in the first and second heads 4a and 4b of the first and second main cylinders 1a and 1b and in the first and second rings 6a and 6b.

This function of bearing weight and reacting to the moment is advantageously also performed by the first and second cylinders 2a and 2b, which react to the heads 5a and 5b.

The reaction of the first and second rings 6a and 6b is suitably countered through the first and second cylinders 2a and 2b, by the first and second main cylinders 1a and 1b, and consequently by the weight-bearing structure of the axle to which the first and second main cylinders 1a and 1b belong.

When the axle is subjected to the system of forces listed above, therefore, the reactions are always released on the first and second main cylindrical bodies 1a and 1b in positions that vary according to the extended position of the cylinders and therefore of the track width.

The axle according to the invention makes it possible to achieve different track widths by extending the mobile bodies to a different extent.

In the case described, the extension is actuated by means of hydraulic cylinders which do not assure a simultaneous, equally large extension on both sides. This would result in an asymmetric positioning of the vehicle relative to the longitudinal axis.

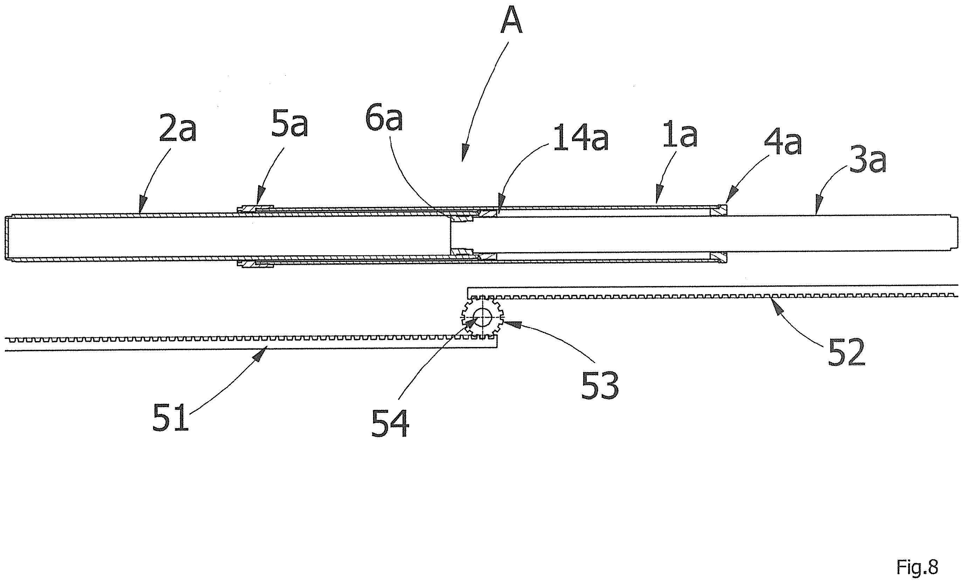

In a further variant embodiment, in order to obtain the symmetry of the vehicle relative to the longitudinal axis, the weight-bearing and braking axle has a mechanical constraint to correlate the strokes of the two extendable elements. In the case shown in figure 8, this constraint is represented by 2 straight toothed bars 51 and 52 which engage a pinion 53 rotating about an axis 54. The bar 51 is integral with the element 2a. The bar 52 is integral with the element 3a, and the axle 54 is integral with the body 1a. Since the mobile elements on side A are mechanically connected to those on side B by means of the heads 8a and 8b, a single mechanical system such as the one described is sufficient to constrain the mobile elements on both side A and side B.

The inclusion of a further locking device, not shown, for the pinion 53 or toothed bars 51 and 52 can be implemented as a safety device in addition to the hydraulic locking system assured by the cylinder drive system.

The weight-bearing and braking axle for vehicles according to the invention appears to be extremely advantageous in that it enables all the forces to be distributed within it while always maintaining the constraints relatively distant from one another, thus contributing to limiting local stresses and reducing the deformability of the axle during its operation.

The weight-bearing and braking axle for vehicles thus conceived is susceptible of numerous modifications and variants, all falling within the scope of the claims.

The materials used, as well as the dimensions, may in practice be of any type, according to needs and the state of the art.

## Claims

1. A weight-bearing and braking axle for vehicles, which comprises a first telescope (A) having a first main cylinder (1a, 101a), a first cylinder (2a, 102a) and a first cylindrical extension body (3a) and a second telescope (B) having a second main cylinder (1b), a second cylinder (2b) and a second cylindrical extension body (3b), said first and second main cylinders (1a) and (1b) being connected to each other by a frame (13), said first cylinder (2a) and said second cylindrical body (3b) being connected to each other by means of a first structure (8a), which has a first mechanical assembly (9a) adapted to support a first wheel of the vehicle, said first and second telescopes (A) and (B) being activated by drive means (11) in order to bring about the movement thereof in two opposite directions to vary the axle track width, **characterised in that** said second cylinder (2b) and said first cylindrical body (3a) are connected to each other by means of a second structure (8b), which has a second mechanical assembly (9b) adapted to support a second wheel of the vehicle

2. The weight-bearing and braking axle for vehicles according to the preceding claim, **characterised in that** said first and second telescopes (A) and (B) are arranged parallel to each other on the same plane and are oriented in opposite directions.

3. The weight-bearing and braking axle for vehicles according to one or more of the preceding claims, **characterised in that** said first and second main cylinders (1a) and (1b) each comprise, at the respective ends thereof, a first and a second limit stop head (4a) and (5b) for the first and second cylinders (2a) and (2b).

4. The weight-bearing and braking axle for vehicles according to claim 3, **characterised in that** said first and second heads (4a) and (4b) are limit stops for the first and second cylinders (2a) and (2b), respectively, when retracted, whereas the first and second heads (5a) and (5b) have the function of guiding the aforesaid first and second cylinders (2a) and (2b).

5. The weight-bearing and braking axle for vehicles according to one or more of the preceding claims, **characterised in that** said first and second cylinders (2a) and (2b) each comprise a first and second rings (14a) and (14b) and **in that** said first and second cylindrical bodies (3a) and (3b) comprise a third and fourth rings (6a) and (6b).

6. The weight-bearing and braking axle for vehicles according to claim 5, **characterised in that** said first and second rings (14a) and (14b) are the limit stops for the first and second cylindrical bodies (3a) and (3b) inside said first and second cylinders (2a) and (2b) when said first and second cylindrical bodies (3a) and (3b) are completely extended and said third and fourth rings (6a) and (6b) are in contact with said first and second rings (14a) and (14b).

7. The weight-bearing and braking axle for vehicles according to one or more of the preceding claims, **characterised in that** said first and second structures (8a) and (8b) are the limit stops for said first and second cylinders (3a) and (3b) when completely retracted.

8. The weight-bearing and braking axle for vehicles according to one or more of the preceding claims, **characterised in that** said drive means (11) comprises a pair of fluid-dynamic cylinders (11) having respective rods (10) for the simultaneous extension of the first and second cylindrical bodies (3a) and (3b) and the first and second cylinders (2a) and (2b).

9. The weight-bearing and braking axle for vehicles according to one or more of the preceding claims, **characterised in that** said fluid-dynamic cylinders (11) are jointed to two supports (12) respectively integral with said first and second main cylinders (1a) and (1b) and/or said frame (13).

10. The weight-bearing and braking axle for vehicles according to claims 8 and 9, **characterised in that** said rods (10) are jointed to two supports (7) integral with said first and second structures (8a) and (8b).

11. The weight-bearing and braking axle for vehicles according to one or more of the preceding claims, **characterised in that** said drive means (11) comprises a worm and a screw.

12. The weight-bearing and braking axle for vehicles according to one or more of the preceding claims, **characterised in that** said drive means (11) comprises a rack.

13. The weight-bearing and braking axle for vehicles according to one or more of the preceding claims, **characterised in that** said first cylinder (101a) consists of two half-cylinders (115a) and (117a) connected to each other by a central element (116a).

14. The weight-bearing and braking axle for vehicles according to claim 13, **characterised in that** said central element (116a) has a guide ring (118a) inside it to enable the sliding of said first cylinder (102a).

15. The weight-bearing and braking axle for vehicles according preceding claim 13 and 14, **characterised in that** said main cylinder (101a) has first and second heads (104a) and (105a) at the respective ends thereof.

16. The weight-bearing and braking axle for vehicles according to claim 15, **characterised in that** said first head (104a) defines the limit stop of said cylinder (102a) when it is retracted and said second head (105a) has the function of guiding said cylinder (102a).

17. The weight-bearing and braking axle for vehicles according to claims 14 or 15, **characterised in that** said cylinder (102a) comprises a ring (114a) and said cylindrical body (103a) comprises a ring (106a).

18. The weight-bearing and braking axle for vehicles according to claim 17, **characterised in that** said ring (114a) acts as a limit stop for said cylindrical body (103a) when it is totally extended from said cylinder (102a).

19. The weight-bearing and braking axle for vehicles according to one or more of the preceding claims, **characterised in that** it comprises two straight toothed bars (51) and (52) which engage a pinion (53) rotating about an axis (54), said bar (51) being integral with the element (2a), said bar (52) being integral with the element (3a), and said axis (54) being integral with the body (1a).

## Patentansprüche

1. Gewichtstragende und Bremsachse für Fahrzeuge, die ein erstes Teleskop (A) umfasst, aufweisend einen ersten Hauptzylinder (1a, 101a), einen ersten Zylinder (2a, 102a) und einen ersten zylindrischen Ausfahrkörper (3a), und ein zweites Teleskop (B), aufweisend einen zweiten Hauptzylinder (1b), einen zweiten Zylinder (2b) und einen zweiten zylindrischen Ausfahrkörper (3b), wobei der erste und der zweite Hauptzylinder (1a) und (1b) miteinander durch einen Rahmen (13) verbunden sind, wobei der erste Zylinder (2a) und der zweite zylindrische Körper (3b) miteinander mittels einer ersten Struktur (8a) verbunden sind, die eine erste mechanische Anordnung (9a) aufweist, ausgelegt, um ein erstes Rad des Fahrzeugs zu stützen, wobei das erste und das zweite Teleskop (A) und (B) von Antriebsmitteln (11) aktiviert werden, um deren Bewegung in zwei entgegengesetzte Richtungen herbeizuführen, um die Achsspurweite zu variieren, **dadurch gekennzeichnet, dass** der zweite Zylinder (2b) und der erste zylindrische Körper (3a) miteinander mittels einer zweiten Struktur (8b) verbunden sind, die eine zweite mechanische Anordnung (9b) aufweist, ausgelegt, um ein zweites Rad des Fahrzeugs zu stützen.

2. Gewichtstragende und Bremsachse für Fahrzeuge nach dem vorhergehenden Anspruch, **dadurch gekennzeichnet, dass** das erste und das zweite Teleskop (A) und (B) parallel zueinander auf derselben Ebene angeordnet und in entgegengesetzte Richtungen ausgerichtet sind.

3. Gewichtstragende und Bremsachse für Fahrzeuge nach einem oder mehreren der vorhergehenden Ansprüche, **dadurch gekennzeichnet, dass** der erste und der zweite Hauptzylinder (1a) und (1b) jeweils an ihren jeweiligen Enden einen ersten und einen zweiten Grenzanschlagskopf (4a) und (5b) für den ersten und den zweiten Zylinder (2a) und (2b) umfassen.

4. Gewichtstragende und Bremsachse für Fahrzeuge nach Anspruch 3, **dadurch gekennzeichnet, dass** der erste und der zweite Kopf (4a) und (4b) Grenzanschläge jeweils für den ersten und den zweiten Zylinder (2a) und (2b) sind, wenn eingefahren, wobei der erste und der zweite Kopf (5a) und (5b) die Aufgabe haben, den ersten und den zweiten Zylinder (2a) und (2b) zu führen.

5. Gewichtstragende und Bremsachse für Fahrzeuge nach einem oder mehreren der vorhergehenden Ansprüche, **dadurch gekennzeichnet, dass** der erste und der zweite Zylinder (2a) und (2b) jeweils einen ersten und einen zweiten Ring (14a) und (14b) umfassen, und dadurch, dass der erste und der zweite zylindrische Körper (3a) und (3b) einen dritten und einen vierten Ring (6a) und (6b) umfassen.

6. Gewichtstragende und Bremsachse für Fahrzeuge nach Anspruch 5, **dadurch gekennzeichnet, dass** der erste und der zweite Ring (14a) und (14b) die Grenzanschläge für den ersten und den zweiten zylindrischen Körper (3a) und (3b) im ersten und zweiten Zylinder (2a) und (2b) sind, wenn der erste und der zweite zylindrische Körper (3a) und (3b) vollständig ausgefahren sind und der dritte und der vierte Ring (6a) und (6b) in Kontakt mit dem ersten und dem zweiten Ring (14a) und (14b) sind.

7. Gewichtstragende und Bremsachse für Fahrzeuge nach einem oder mehreren der vorhergehenden Ansprüche, **dadurch gekennzeichnet, dass** die erste und die zweite Struktur (8a) und (8b) Grenzanschläge für den ersten und den zweiten Zylinder (3a) und (3b) sind, wenn komplett eingefahren.

8. Gewichtstragende und Bremsachse für Fahrzeuge nach einem oder mehreren der vorhergehenden Ansprüche, **dadurch gekennzeichnet, dass** die Antriebsmittel (11) ein Paar fluiddynamische Zylinder (11) umfassen, aufweisend jeweilige Stangen (10) für das gleichzeitige Ausfahren des ersten und zweiten zylindrischen Körpers (3a) und (3b) und des ersten und zweiten Zylinders (2a) und (2b).

9. Gewichtstragende und Bremsachse für Fahrzeuge nach einem oder mehreren der vorhergehenden Ansprüche, **dadurch gekennzeichnet, dass** die fluiddynamischen Zylinder (11) mit zwei Halterungen (12) gekuppelt sind, die jeweils fest mit dem ersten und zweiten Hauptzylinder (1a) und (1b) und/oder dem Rahmen (13) verbunden sind.

10. Gewichtstragende und Bremsachse für Fahrzeuge nach Anspruch 8 und 9, **dadurch gekennzeichnet, dass** die Stangen (10) mit zwei Halterungen (7) gekuppelt sind, fest verbunden mit der ersten und der zweiten Struktur (8a) und (8b).

11. Gewichtstragende und Bremsachse für Fahrzeuge nach einem oder mehreren der vorhergehenden Ansprüche, **dadurch gekennzeichnet, dass** die Antriebsmittel (11) eine Schnecke und eine Schraube umfassen.

12. Gewichtstragende und Bremsachse für Fahrzeuge nach einem oder mehreren der vorhergehenden Ansprüche, **dadurch gekennzeichnet, dass** die Antriebsmittel (11) eine Zahnstange umfassen.

13. Gewichtstragende und Bremsachse für Fahrzeuge nach einem oder mehreren der vorhergehenden Ansprüche, **dadurch gekennzeichnet, dass** der erste Zylinder (101a) aus zwei Halbzylindern (115a) und (117a) besteht, die miteinander mittels eines zentralen Elements (116a) verbunden sind.

14. Gewichtstragende und Bremsachse für Fahrzeuge nach Anspruch 13, **dadurch gekennzeichnet, dass** das zentrale Element (116a) innenseitig einen Führungsring (118a) aufweist, um das Gleiten des ersten Zylinders (102a) zu ermöglichen.

15. Gewichtstragende und Bremsachse für Fahrzeuge nach Anspruch 13 und 14, **dadurch gekennzeichnet, dass** der Hauptzylinder (101a) einen ersten und einen zweiten Kopf (104a) und (105a) an seinen jeweiligen Enden aufweist.

16. Gewichtstragende und Bremsachse für Fahrzeuge nach Anspruch 15, **dadurch gekennzeichnet, dass** der erste Kopf (104a) den Grenzanschlag des Zylinders (102a) definiert, wenn dieser eingefahren ist, und dass der zweite Kopf (105a) die Aufgabe hat, den Zylinder (102a) zu führen.

17. Gewichtstragende und Bremsachse für Fahrzeuge nach Anspruch 14 oder 15, **dadurch gekennzeichnet, dass** der Zylinder (102a) einen Ring (114a) umfasst und der zylindrische Körper (103) einen Ring (106a) umfasst.

18. Gewichtstragende und Bremsachse für Fahrzeuge nach Anspruch 17, **dadurch gekennzeichnet, dass** der Ring (114a) als Grenzanschlag für den zylindrischen Körper (103a) fungiert, wenn er vollständig aus dem Zylinder (102a) ausgefahren ist.

19. Gewichtstragende und Bremsachse für Fahrzeuge nach einem oder mehreren der vorhergehenden Ansprüche, **dadurch gekennzeichnet, dass** sie zwei gerade Zahnstangen (51) und (52) umfasst, die in ein Ritzel (53) eingreifen, das sich um eine Achse (54) dreht, wobei die Stange (51) fest mit dem Element (2a) verbunden ist, wobei die Stange (52) fest mit dem Element (3a) verbunden ist und wobei die Achse (54) fest mit dem Körper (1a) verbunden ist.

## Revendications

1. Essieu porteur et de freinage pour véhicules comprenant un premier télescope (A) comportant un premier cylindre principal (1a, 101a), un premier cylindre (2a, 102a) et un premier corps cylindrique d'extension (3a) et un second télescope (B) comportant un second cylindre principal (1b), un second cylindre (2b) et un second corps cylindrique d'extension (3b), lesdits premier et second cylindres principaux (1a) et (1b) étant reliés l'un à l'autre par un châssis (13), ledit premier cylindre (2a) et ledit second corps cylindrique (3b) étant reliés l'un à l'autre au moyen d'une première structure (8a) comportant un premier assemblage mécanique (9a) adapté pour supporter une première roue du véhicule, lesdits premier et second télescopes (A) et (B) étant activés par des moyens d'entraînement (11) afin de provoquer leur déplacement dans deux directions opposées pour varier la voie d'essieu, **caractérisé en ce que** ledit second cylindre (2b) et ledit premier corps cylindrique (3a) sont reliés l'un à l'autre au moyen d'une seconde structure (8b) comportant un second assemblage mécanique (9b) adapté pour supporter une seconde roue du véhicule.

2. Essieu porteur et de freinage pour véhicules selon la revendication précédente, **caractérisé en ce que** lesdits premier et second télescopes (A) et (B) sont disposés parallèlement l'un à l'autre sur le même plan et orientés dans des directions opposées.

3. Essieu porteur et de freinage pour véhicules selon l'une ou plusieurs des revendications précédentes, **caractérisé en ce que** lesdits premier et second cylindres principaux (1a) et (1b) comprennent chacun, à leurs extrémités respectives, une première et une seconde tête de butée de fin de course (4a) et (5b) pour les premier et second cylindres (2a) et (2b).

4. Essieu porteur et de freinage pour véhicules selon la revendication 3, **caractérisé en ce que** lesdites première et seconde têtes (4a) et (4b) sont des butées de fin de course, respectivement, pour les premier et second cylindres (2a) et (2b), lorsqu'elles sont rétractées, tandis que les première et seconde têtes (5a) et (5b) ont une fonction de guidage des susdits premier et second cylindres (2a) et (2b).

5. Essieu porteur et de freinage pour véhicules selon l'une ou plusieurs des revendications précédentes, **caractérisé en ce que** lesdits premier et second cylindres (2a) et (2b) comprennent chacun un premier et un second anneau (14a) et (14b) et **en ce que** lesdits premier et second corps cylindriques (3a) et (3b) comprennent un troisième et un quatrième anneau (6a) et (6b).

6. Essieu porteur et de freinage pour véhicules selon la revendication 5, **caractérisé en ce que** lesdits premier et second anneaux (14a) et (14b) sont des butées de fin de course pour les premier et second corps cylindriques (3a) et (3b) à l'intérieur desdits premier et second cylindres (2a) et (2b) lorsque lesdits premier et second corps cylindriques (3a) et (3b) sont complètement étendus et lesdits troisième et quatrième anneaux (6a) et (6b) sont en contact avec lesdits premier et second anneaux (14a) et (14b).

7. Essieu porteur et de freinage pour véhicules selon l'une ou plusieurs des revendications précédentes, **caractérisé en ce que** lesdites première et seconde structures (8a) et (8b) sont des butées de fin de course pour lesdits premier et second cylindres (3a) et (3b) lorsqu'ils sont complètement rétractés.

8. Essieu porteur et de freinage pour véhicules selon l'une ou plusieurs des revendications précédentes, **caractérisé en ce que** lesdits moyens d'entraînement (11) comprennent une paire de cylindres fluidodynamiques (11) comportant des axes (10) respectifs pour l'extension simultanée des premier et second corps cylindriques (3a) et (3b) et des premier et second cylindres (2a) et (2b).

9. Essieu porteur et de freinage pour véhicules selon l'une ou plusieurs des revendications précédentes, **caractérisé en ce que** lesdits cylindres fluidodynamiques (11) sont joints à deux supports (12) respectivement solidaires desdits premier et second cylindres principaux (1a) et (1b) et/ou dudit châssis (13).

10. Essieu porteur et de freinage pour véhicules selon les revendications 8 et 9, **caractérisé en ce que** lesdits axes (10) sont joints à deux supports (7) solidaires desdites première et seconde structures (8a) et (8b).

11. Essieu porteur et de freinage pour véhicules selon l'une ou plusieurs des revendications précédentes, **caractérisé en ce que** lesdits moyens d'entraînement (11) comprennent une vis sans fin et une vis.

12. Essieu porteur et de freinage pour véhicules selon l'une ou plusieurs des revendications précédentes, **caractérisé en ce que** lesdits moyens d'entraînement (11) comprennent une crémaillère.

13. Essieu porteur et de freinage pour véhicules selon l'une ou plusieurs des revendications précédentes, **caractérisé en ce que** ledit premier cylindre (101a) consiste en deux demi-cylindres (115a) et (117a) reliés l'un à l'autre par un élément central (116a).

14. Essieu porteur et de freinage pour véhicules selon la revendication 13, **caractérisé en ce que** ledit élément central (116a) comporte un anneau de guidage (118a) en son sein pour activer le coulissement dudit premier cylindre (102a).

15. Essieu porteur et de freinage pour véhicules selon les revendications précédentes 13 et 14, **caractérisé en ce que** ledit cylindre principal (101a) comporte des première et seconde têtes (104a) et (105a) à ses extrémités respectives.

16. Essieu porteur et de freinage pour véhicules selon la revendication 15, **caractérisé en ce que** ladite première tête (104a) définit la butée de fin de course dudit cylindre (102a) lorsqu'il est rétracté et ladite seconde tête (105a) a une fonction de guidage dudit cylindre (102a).

17. Essieu porteur et de freinage pour véhicules selon la revendication 14 ou 15, **caractérisé en ce que** ledit cylindre (102a) comprend un anneau (114a) et ledit corps cylindrique (103a) comprend un anneau (106a).

18. Essieu porteur et de freinage pour véhicules selon la revendication 17, **caractérisé en ce que** ledit anneau (114a) agit comme une butée de fin de course pour ledit corps cylindrique (103a) lorsqu'il est totalement étendu à partir dudit cylindre (102a).

19. Essieu porteur et de freinage pour véhicules selon l'une ou plusieurs des revendications précédentes, **caractérisé en ce qu'**il comprend deux barres dentées rectilignes (51) et (52) se mettant en prise avec un pignon (53) tournant autour d'un axe (54), ladite barre (51) étant solidaire de l'élément (2a), ladite barre (52) étant solidaire de l'élément (3a), et ledit axe (54) étant solidaire du corps (1a).
